# EUROPEAN PATENT SPECIFICATION

(11) **EP 2 249 133 B1**
(45) Date of publication and mention of the grant of the patent: **16.10.2019**
(21) Application number: 09159656.9
(22) Date of filing: 07.05.2009
(51) Int. Cl.: G01F 3/22, G01F 15/075

(54) **Gas meter**
Gasmessgerät
Compteur de gaz

(43) Date of publication of application: 10.11.2010
(73) Proprietor: Itron GmbH, 76185 Karlsruhe (DE)
(72) Inventor: Carver, Andrew, 76351 Linkenheim (DE)
(74) Representative: Howson, Richard Giles Bentham

(56) References cited:
- EP-A- 2 063 234
- WO-A-94/01740
- WO-A-94/01741
- FR-A- 1 079 843

## Description

The present invention is related to a gas meter for supplying gas to residences, office buildings and the like, and more particularly to an electronic display gas meter.

Natural gas is a well-known, clean, and relatively inexpensive fuel source. As such, gas distribution systems and gas meters have been widely installed in various population centers throughout the industrialized word.

In a conventional manner, as mentioned in document US 4,593,562, a gas meter comprises a sealed external housing, a measurement unit placed inside the housing and a totalizer placed outside the housing which makes it possible to display mechanically the volume measured by the measurement unit. A motion is typically transmitted by a drive train to a counter which thus serves to display the quantity of gas which has passed through the measuring unit.

The drive train, which can be an axis or a magnetically coupled drive train, passes through the external housing to actuate an index mechanism in the totalizer.

Another example of a gas meter is disclosed in International patent application publication WO9401741.

Such a gas meter suffers the shortcoming that the passage of the drive train through the housing has an associated drag on the meter and that this could change as the meter ages and also needs to be calibrated out in the manufacturing process. Moreover, the passage of the drive train could alter the gas-tightness of the meter.

Thus, an object of the present invention is to provide a gas meter in such a manner as to solve the above-described problems.

The object mentioned above is accomplished by a gas meter according to claim 1.

This specific arrangement provides that no dynamic drive needs to pass through a wall of the housing. The mechanical gas volume totalization and digitisation takes place within the housing. The encoding means provide an electronic signal relative to the gas volume totalization and hence an electronic indication or display of the gas volume measurement outside the common housing is possible.

The gas meter can comprise electronic means connected to the encoding means for transmitting the electronic signal provided by the encoding means outside the housing.

The gas meter advantageously further comprises a display device placed outside the gas housing and in electronic connection with the encoding means.

The mechanical means comprise at least one gear wheel.

The at least one gear wheel is actuated by a drive gear.

The encoding means comprise at least one sensor for detecting the angular position or rotation count of the at least one gear wheel.

The encoding means preferably comprise one sensor for each gear wheel.

The measuring unit typically comprises at least one deformable membrane which separates two adjacent displacement measuring chambers.

Other features and advantages of the invention will become apparent from the following description of an embodiment of the invention given by way of a non-limiting example only, and with reference to the accompanying drawings, in which:
- Figure 1 is a schematic side view of a gas meter according to the invention,
- Figure 2 is a partial top view of the gas meter, and
- Figure 3 is a partial front view of the mechanical means of the gas meter.

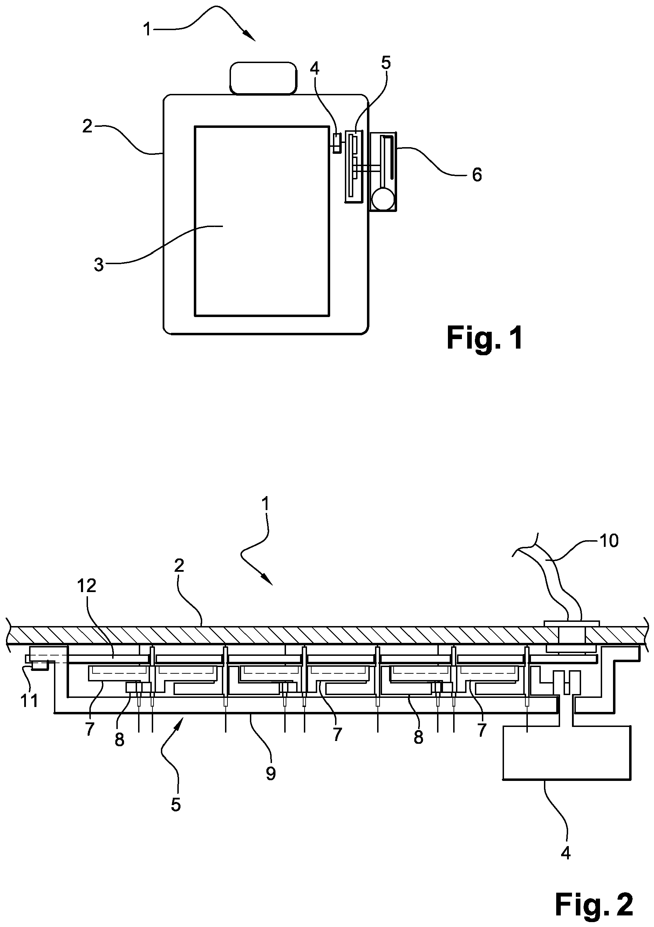

As illustrated in figure 1, a gas meter 1 according to the invention comprises a gas tight housing 2 containing a measuring unit 3, a drive gear 4 and a mechanical totalizer or digitizer 5. A display box 6 is placed outside the housing 2.

When entering the gas meter 1, the gas is routed toward the measuring unit 3. The measuring unit 3 can typically comprise at least one deformable membrane which separates two adjacent displacement measuring chambers. The gas whose volume is to be measured is injected into and evacuated from the measuring chambers and causes the membrane to move back and forth. Membrane motion is transmitted by the drive gear 4 to the totalizer or digitizer 5 which is connected to the display box 6 that serves to display the quantity of gas which has passed through the measuring chambers.

As illustrated in figure 2, the mechanical totalizer or digitizer 5 includes a set of gears 7 driven by the drive gear 4 through intermediate gears 8. A sensor detects the angular position of one or all of the gears 7 and hence acts as a non-volatile memory of the number of rotations that the gears 7 have made. The gear based non-volatile memory is used for encoding the number of rotations of the gears 7. For a better accuracy, every gear 7 is equipped with a sensor, so that the angular position of all of the gears 7 can be detected. A top view of three encoded gear wheels 7 is shown in figure 2.

The sensor can be any technology used for detecting angle or rotation such as an inductive, a capacitive, a magnetic or an optical sensor, but preferably an inductive one, since this kind of sensors is more contamination resistant.

The encoded gears 7 are disposed on a plastic housing 9 which is put on the internal face of the external housing 2 of the gas meter 1. A pressure sensor and temperature sensor 11 can be included on a sensing circuit board 12. The encoded gears 7 are connected to the outside of the housing 2 with the help of a cable 10. The cable 10 makes it possible to transmit the electronic signal of the sensors to the outside of the housing 2, for instance in the display box 6, as shown in figure 1.

Thus, with the number of rotations of the measuring unit together with the characteristic volume for one cycle of the measuring unit, the total volume registered by the meter can be read out electronically. With multiple sensors and geared wheels, the time between activation of the sensors can be increased to read the position of the mechanical means unambiguously. Moreover, the totalizer 5 is mounted within the gas tight housing 2, so that there is no dynamic passage through the housing 2 or magnetically coupled movement through the housing 2.

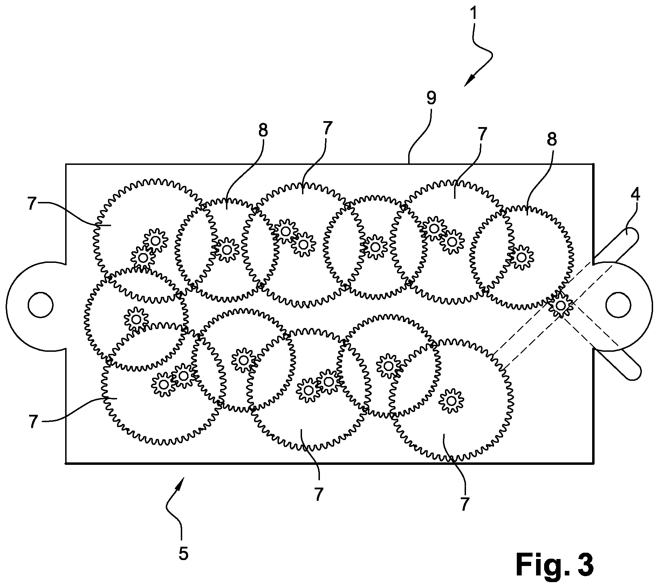

Figure 3 is a front view of the totalizer 5. Two ranges of three encoded gears 7 are driven by the drive gear 4 and the intermediate gears 8.

Thus, the drag on the meter can be more constant with time and hence the overall accuracy of the meter will be more stable. The electronic pick-up meter is more tamper resistant than other meters as there is no rotation external to the case that could be influenced. Batteryless non-volatile memory is possible with the gears, this would mean than no setting of the electronic index would be needed and also if the battery dies the meter can still calculate the consumed volume.

Moreover, the manufacturing process of the meter is simplified as there is no dynamic rotation passing through the gas tight housing. Calibration of the meter could be done before the meter is assembled.

## Claims

1. Gas meter (1) comprising :
a measuring unit (3) through which a gas volume flows,
mechanical means (7) driven by the measuring unit (3) for totalizing or digitising the gas volume, the mechanical means (7) comprising at least one gear wheel (7) actuated by a drive gear (4), and
encoding means associated with the at least one gear wheel (7), for encoding the number of rotations of the at least one gear wheel (7), the encoding means comprising at least one sensor for detecting the angular position or rotation count of the set of the at least one gear wheel (7),
**characterized in that** the measuring unit (3), the mechanical means (7) and the encoding means are placed within a common gas-tight housing (2).

2. Gas meter (1) according to claim 1, **characterized in that** it comprises electronic means (10) connected to the encoding means for transmitting the electronic signal provided by the encoding means outside the housing (2).

3. Gas meter (1) according to claim 1 or 2, **characterized in that** it further comprises a display device (6) placed outside the gas housing (2) and in electronic connection with the encoding means.

4. Gas meter (1) according to claim 1 to 3, **characterized in that** the encoding means comprise one sensor for each gear wheel (7).

5. Gas meter (1) according to any one of claim 1 to 4, **characterized in that** the measuring unit (3) comprises at least one deformable membrane which separates two adjacent displacement measuring chambers.

## Patentansprüche

1. Gasmessgerät (1), umfassend:
eine Messeinheit (3), durch die ein Gasvolumen strömt,
mechanische Mittel (7), die von der Messeinheit (3) angetrieben werden, zur Totalisierung oder Digitalisierung des Gasvolumens, die mechanischen Mittel (7) umfassend mindestens ein Getrieberad (7), das von einem Antriebsgetriebe (4) betätigt wird, und
Codierungsmittel, die mit dem mindestens einen Getrieberad (7) in Verbindung stehen, zur Codierung der Anzahl von Umdrehungen des mindestens einen Getrieberads (7), die Codierungsmittel umfassend mindestens einen Sensor zur Erfassung der Winkelposition oder Umdrehungszahl des Satzes des mindestens einen Getrieberads (7),
**dadurch gekennzeichnet, dass** die Messeinheit (3), die mechanischen Mittel (7) und die Codierungsmittel innerhalb eines gemeinsamen gasdichten Gehäuses (2) platziert sind.

2. Gasmessgerät (1) nach Anspruch 1, **dadurch gekennzeichnet, dass** es elektronische Mittel (10) umfasst, die mit den Codierungsmitteln zur Übertragung des elektronischen Signals, das von den Codierungsmitteln außerhalb des Gehäuses (2) bereitgestellt wird, verbunden ist.

3. Gasmessgerät (1) nach Anspruch 1 oder 2, **dadurch gekennzeichnet, dass** es ferner eine Anzeigevorrichtung (6) umfasst, die außerhalb des Gasgehäuses (2) und in elektronischer Verbindung mit den Codierungsmitteln platziert ist.

4. Gasmessgerät (1) nach Anspruch 1 bis 3, **dadurch gekennzeichnet, dass** die Codierungsmittel einen Sensor für jedes Getrieberad (7) umfassen.

5. Gasmessgerät (1) nach einem der Ansprüche 1 bis 4, **dadurch gekennzeichnet, dass** die Messeinheit (3) mindestens eine verformbare Membran umfasst, die zwei benachbarte Verschiebungsmesskammern trennt.

## Revendications

1. Compteur de gaz (1) comprenant :
une unité de mesure (3) à travers laquelle un volume de gaz s'écoule, des moyens mécaniques (7) entraînés par l'unité de mesure (3) pour totaliser ou numériser le volume de gaz, les moyens mécaniques (7) comprenant au moins une roue dentée (7) actionnée par un engrenage d'entraînement (4), et
des moyens de codage associés à l'au moins une roue dentée (7), pour coder le nombre de rotations de l'au moins une roue dentée (7), les moyens de codage comprenant au moins un capteur pour détecter la position angulaire ou le compte de rotation de l'ensemble de l'au moins une roue dentée (7),
**caractérisé en ce que** l'unité de mesure (3), le moyen mécanique (7) et le moyen de codage sont placés dans un boîtier commun étanche au gaz (2).

2. Compteur de gaz (1) selon la revendication 1, **caractérisé en ce qu'**il comprend des moyens électroniques (10) connectés aux moyens de codage pour transmettre le signal électronique fourni par les moyens de codage à l'extérieur du boîtier (2).

3. Compteur de gaz (1) selon la revendication 1 ou 2, **caractérisé en ce qu'**il comprend en outre un dispositif d'affichage (6) placé à l'extérieur du boîtier de gaz (2) et en connexion électronique avec les moyens de codage.

4. Compteur de gaz (1) selon les revendications 1 à 3, **caractérisé en ce que** les moyens de codage comprennent un capteur pour chaque roue dentée (7).

5. Compteur de gaz (1) selon l'une quelconque des revendications 1 à 4, **caractérisé en ce que** l'unité de mesure (3) comprend au moins une membrane déformable qui sépare deux chambres de mesure de déplacement adjacentes.
